# EUROPÄISCHE PATENTANMELDUNG

(11) **EP 0 604 725 A2**
(43) Veröffentlichungstag der Anmeldung: **06.07.1994**
(21) Anmeldenummer: 93117208.4
(22) Anmeldetag: 23.10.1993
(51) Int. Cl.: B01D 29/27

(54) **Vorrichtung zum Ausfiltern von Flocken**

(30) Priorität: 27.11.1992 DE 4239906
(71) Anmelder: Koch, Berthold, D-41468 Neuss (DE)
(72) Erfinder: Koch, Berthold, D-41468 Neuss (DE)
(74) Vertreter: Türk, Gille, Hrabal, Leifert

(57) **Zusammenfassung**

Es ist eine Vorrichtung zum Entfernen von ausflockbaren Fremd- bis Schwebstoffen aus Flüssigkeiten offenbart, die einen auswechselbaren flüssigkeitsdurchlässigen Filtersack, in den ein Fallrohr als Zulauf für auszufilternde Flocken enthaltende Flüssigkeiten mündet, aufweist. Das starr oder flexibel bzw. biegsam ausgebildete Fallrohr erstreckt sich mit seinem Auslauf bis nahe an das geschlossene untere Ende des Filtersackes.

## Beschreibung

Die Erfindung betrifft eine Vorrichtung zum Entfernen von ausflockbaren Fremd- bis Schwebstoffen aus Flüssigkeiten, welche einen auswechselbaren flüssigkeitsdurchlässigen Filter wie einen Filtersack oder Filterbeutel aufweist, in den ein Fallrohr als Zulauf für auszufilternde Flocken enthaltende Flüssigkeiten mündet.

Zum Brechen von Emulsionen, beispielsweise Öl-in-Wasser-Emulsionen, ist es bekannt, der Flüssigkeit bzw. der Emulsion Bentonit als Spaltpulver zuzugeben, um beispielsweise das Öl durch Flokkung bzw. Flockenbildung vom Wasser zu trennen. Diese Flocken können dann durch Abfiltrierung aus dem Wasser entfernt werden.

Für eine gute Flockung ist es bisher erforderlich, eine verhältnismäßig große Menge Spaltpulver der Emulsion zuzugeben. Das verursacht nicht nur erhöhte Kosten, sondern auch Entsorgungsprobleme, denn mit Öl beladene Bentonit-Flocken gelten als Sondermüll und bedingen somit eine spezielle Entsorgung.

Der Erfindung liegt die Aufgabe zugrunde, die Menge des zum Brechen von Emulsionen notwendigen Spaltpulvers so klein wie möglich zu halten und eine Vorrichtung zum Entfernen von ausflockbaren Fremd- bis Schwebstoffen zu schaffen, die es ermöglicht, unter Einsatz einer möglichst geringen Menge von Spaltpulver aus Emulsionen die Problem-stoffe wie Öl wirksam zu entfernen.

Diese Aufgabe wird erfindungsgemäß mit einer Vorrichtung der eingangs genannten Gattung gelöst, welche die Merkmale des kennzeichnenden Teiles des Patentanspruches 1 aufweist. Vorteilhafte Ausgestaltungen der Erfindung sind Gegenstand der Unteransprüche.

Da bei der erfindungsgemäßen Vorrichtung die mit Fremd- bis Schwebstoffen beladene Flüssigkeit nicht in den Filter, beispielsweise den Filtersack, hineinfällt, sondern drucklos durch das verlängerte Fallrohr einläuft, wird ein Aufwirbeln der im Filtersack bereits abgelagerten Flocken vermieden. Ein solches Aufwirbeln führt nämlich dazu, daß sich die auszufilternden Flocken bevorzugt an den Wänden des Filtersackes absetzen und dessen Öffnungen oder Poren schnell zusetzen, so daß der Flüssigkeitspegel im Filtersack ansteigt, ohne daß der Filtersack entsprechend mit ausgeflocktem Material gefüllt ist. Die Filtermöglichkeit des Filtersackes ist daher verhältnismäßig schnell erschöpft, ohne daß sein Füllvermögen für die Zurückhaltung ausgeflockter Emulsionsstoffe voll genutzt werden könnte. Mit der erfindungsgemäßen Vorrichtung wird hingegen der Filter von unten nach oben ansteigend gleichmäßig mit Filtrat gefüllt, während das über dem Filterkuchen stehende Wasser oder die sonstige Flüssigkeit vollständig nach außen durch die noch nicht von Filtrat zugesetzten Poren des Filtermaterials, beispielsweise des Filtersackes, abfließen kann.

Ein weiterer Vorteil der erfindungsgemäßen Vorrichtung liegt darin, daß das ausgeflockte Material, welches sich im Filter bzw. im Filtersack bereits als eine Art Kuchen abgesetzt hat, zur Ausflockung und Ausfilterung von Öl oder sonstigen Emulsionsbestandteilen genutzt werden kann. Es hat sich nämlich in überraschender Weise gezeigt, daß das im Filter wie dem Filtersack abgelagerte ausgeflockte Material eine Art Vorfilter bildet, welches die Ausflockung von Emulsionsstoffen begünstigt und unterstützt, wenn die durch das bis nahe an das untere Ende bzw. den Boden des Filtersakkes reichende Fallrohr zulaufende Flüssigkeit nach oben steigend durch das Filtrat bzw. den Filterkuchen sozusagen nach dem Prinzip der kommunizierenden Röhren hochsteigt. Dabei werden feine Kanälchen im Filterkuchen gebildet, welche eine gute Abscheidung von Öl auch bei Einsatz einer verhältnismäßig geringen Menge Spaltpulver bewirken bzw. unterstützen.

Mit der erfindungsgemäßen Vorrichtung wird die Filterleistung und insbesondere die Standzeit des Filters und die Filterwirkung, bei druckloser Ausfiltrierung von Fremd- bis Schwebstoffen einschließlich Flocken verschiedener Größen aus einer Flüssigkeit verbessert, wobei ein sogenanntes Auffangfilter wie ein Filtersack, ein Filterbeutel oder ähnliches benutzt wird.

Bei der erfindungsgemäßen Vorrichtung ist der Einlauf der zu filternden Flüssigkeiten derart gestaltet, daß die mit Fremd- bzw. Schwebstoffen wie Flocken beladene Flüssigkeit nicht frei fließend in den Filter fällt. Das für den Zulauf der Flüssigkeit vorgesehene Fallrohr kann gerade, aber auch gebogen, abgewinkelt oder sonstwie geformt sein und ist mit Auslauföffnungen versehen, welche die zulaufende Flüssigkeit richten bzw. so umleiten, daß eine schonende Einleitung der Flüssigkeit in den Filter bewirkt wird, nämlich zum unteren Ende oder Boden des Filters, so daß die zulaufende Flüssigkeit das bereits abgesetzte oder sedimentierte Filtrat nicht wieder aufwirbelt und die Flocken des Filtrats zerschlägt. Vielmehr werden die zulaufenden Teilchen bzw. Flocken durch gezieltes Konglomerieren vergrößert, während die zulaufende Flüssigkeit zwangsweise durch den schon abgelagerten Filtratkuchen geströmt. Dabei erfolgt eine gezielte sukzessive Filterbenetzung und damit eine optimale Ausflockung und Ablagerung der aus der Emulsion zu entfernenden Bestandteile.

Da mit der erfindungsgemäßen Vorrichtung zu kleine Flocken vermieden bzw. kleinere Flocken vor dem Absetzen vergrößert werden, kann das vorzeitige Zusetzen der Poren des Filtermaterials wie beispielsweise der Wand des Filtersackes vermieden werden, so daß das Filtrat bzw. der Filterkuchen im Filtersack mehr oder weniger gleichförmig ansteigt und damit der Filtersack optimal genutzt werden kann, weil über die Oberfläche des im Filtersack abgesetzten Filterkuchens das von Flokken oder anderen Stoffen befreite Wasser mehr oder weniger ungehindert zur Seite abfließen kann. Somit erhält man ein in einem Filter wie einem Filtersack oder Filterbeutel kompakt abgesetztes Filtrat, das weniger Raum beansprucht, so daß die Entsorgung mit geringster Raumbeanspruchung erfolgen kann. Dies ist besonders deshalb von Bedeutung, weil aus Emulsionen abgeschiedenes Material wie Öl als Sondermüll zu entsorgen ist, selbst wenn dieses Öl mit Flockungsmitteln wie Bentonit gebunden wurde.

In der Zeichnung sind zwei Ausführungsbeispiele der erfindungsgemäßen Vorrichtung zum Entfernen von ausflockbaren Fremd- bis Schwebstoffen aus Flüssigkeiten schematisch dargestellt, und zwar zeigt
Fig. 1 einen senkrechten Schnitt durch einen Filtersack mit darin angeordnetem Fallrohr und der Halterung des Filtersackes und
Fig. 2 eine schematische Darstellung des unteren Endes des Fallrohres in einer gegenüber Fig. 1 abgewandelten Ausführungsform.

An einer rohrförmigen Armatur 1, welche ein fest installiertes Einlaufrohr 2 und einen daran angeschlossenen Einlaufstutzen 3 mit umflaufendem Flansch 4 aufweist, ist ein aus flüssigkeitsdurchlässigem Material wie Gewebe bestehender Filtersack 5 auswechselbar angebracht. Zu diesem Zweck ist oberhalb des Flansches 4 um das Einlaufrohr 2 ein in nicht näher dargestellter Weise zu öffnender und zu schließender Klemmring 6 angeordnet, der das obere Ende 7 des Filtersackes 5 erfaßt und an der Armatur 1 festhält.

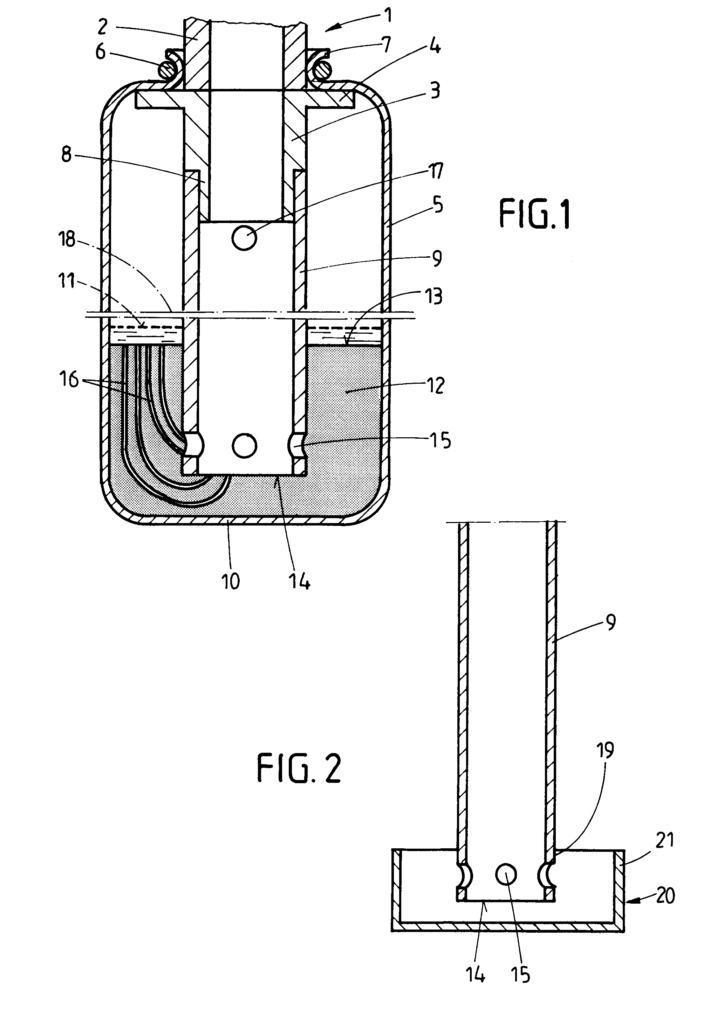

Das untere Ende 8 des Einlaufstutzens 3 ist nach innen abgesetzt bzw. im Durchmesser verringert und dient als Auflager für ein an der Armatur angebrachtes und dabei auf das untere Ende 8 des Einlaufstutzens 3 aufgezogenes Fallrohr 9, das sich bis dicht an das untere Ende bzw. den Boden 10 des Filtersackes 5 erstreckt. Somit läuft die zu filternde Flüssigkeit durch die Armatur 1 und das Fallrohr 9 bis zum unteren Ende des Filtersackes 5 und kann dort aus dem Fallrohr 9 austreten und von dort nach oben steigen, sofern der Flüssigkeitsspiegel 11 oder ein im Filtersack 5 abgelagerter Filterkuchen 12 mit seiner Oberfläche 13 über das Niveau der am unteren Ende des Fallrohres 9 befindlichen Auslaßöffnung 14 angestiegen ist. Dieser Zustand ist in Figur 1 zu erkennen.

Oberhalb der Auslauföffnung 14 sind im unteren Ende des Fallrohrs 9 radiale Auslauföffnungen 15 angeordnet, durch welche die zulaufende und mit Fremdstoffen wie ausgeflockten ÖI-Bentonit-Partikeln beladene Flüssigkeit ebenfalls austreten kann.

Aus Fig. 1 ist erkennbar, daß die Oberfläche 13 des Filterkuchens 12 etwa horizontal verläuft und sich somit oberhalb des Filterkuchens nur eine verhältnismäßig dünne Flüssigkeitsschicht einstellt, deren Spiegel 11 dementsprechend dicht über der Oberfläche 13 des Filterkuchens 12 liegt, weil die über dem Filterkuchen abgelagerte Flüssigkeit seitlich durch den Filtersack 5 ausströmen kann, denn die abgelagerten Flocken oder sonstigen Verunreinigungen der Flüssigkeit können oberhalb des Filterkuchens 12 die Seitenwand des Filtersackes 5 nicht zusetzen. Vielmehr wird die Seitenwand des Filtersackes 5 lediglich im Bereich des langsam ansteigenden Filterkuchens 12 praktisch flüssigkeitsundurchlässig.

Die im Fallrohr 9 zulaufende Flüssigkeit steigt durch den Filterkuchen 12 durch feine Kanälchen 16 zur Oberfläche 13 auf. Von diesen Kanälchen 16 sind in Fig. 1 auf der linken Seite nur einige wenige dargestellt, während tatsächlich eine sehr viel größere Anzahl dieser Kanälchen von der hochsteigenden Flüssigkeit im Filterkuchen gebildet wird. In diesen Kanälchen werden die von der zulaufenden Flüssigkeit herangeführten Flocken oder sonstigen Fremdstoffe weitgehend bereits gebunden und somit von der Flüssigkeit getrennt, die sozusagen sprudelnd oder ähnlich wie eine Quelle an der Oberfläche 13 austritt und dann oberhalb der Oberfläche 13 seitlich durch den Filtersack 5 abfliessen und einer erneuten Verwendung zugeführt werden kann.

Am oberen Ende des Fallrohres 9 sind als Überlauf dienende radiale Bohrungen 17 angeordnet, von denen in Fig. 1 nur eine dargestellt ist. Meistens sind jedoch auf den Umfang des Fallrohres 9 verteilt vier derartiger Bohrungen 17 vorgesehen. Durch diese Bohrungen 17 kann die zulaufende Flüssigkeit austreten, wenn der Flüssigkeitsspiegel im Fallrohr 9 ansteigt, weil aus dem unteren Ende des Fallrohres keine oder nicht genügend Flüssigkeit abströmen kann. Das ist dann ein Zeichen dafür, daß der Filtersack 5 mit auszufilterndem Material weitgehend gefüllt ist und ausgewechselt werden muß.

In Fig. 1 sind der Filtersack 5 und das in diesem angeordnete Fallrohr 9 verkürzt dargestellt, wie durch die strichpunktierten Trennlinien 18 angedeutet ist.

Aus Fig. 2 ist erkennbar, daß das untere Ende 19 des Fallrohres 9 in eine Glocke 20, die im vorliegenden Fall napf- oder schalenförmig ausgebildet ist, derart hineinragt, daß sowohl die Auslauföffnung 14 als auch die radialen Auslauföffnungen 15 innerhalb der Seitenwand 21 der Glocke 20 liegen. Dementsprechend wird die durch das Fallrohr 9 zulaufende Flüssigkeit von der Glocke 20 bzw. deren Seitenwand 21 zusätzlich nach oben umgelenkt. Im übrigen arbeitet aber diese Ausführungsform der Vorrichtung ebenso wie die in Verbindung mit Fig. 1 beschriebene Ausführungsform.

Die Glocke 20 ist in nicht näher dargestellter Weise am Fallrohr 9 befestigt, so daß sie mit dem Fallrohr als Einheit aus- und eingebaut werden kann.

## Patentansprüche

1. Vorrichtung zum Entfernen von ausflockbaren Fremd- bis Schwebstoffen aus Flüssigkeiten, mit einem auswechselbaren flüssigkeitsdurchlässigen Filter wie einem Filtersack, in den ein Fallrohr als Zulauf für auszufilternde Flocken enthaltende Flüssigkeiten mündet, dadurch gekennzeichnet, daß das starr oder flexibel bzw. biegsam ausgebildete Fallrohr (9) sich mit seinem Auslauf (14) bis nahe an das geschlossene untere Ende (10) des Filters (5) erstreckt.

2. Vorrichtung nach Anspruch 1, dadurch gekennzeichnet, daß das Fallrohr (9) nahe seinem oberen Ende mit wenigstens einer als Überlauf dienenden Öffnung (17) versehen ist.

3. Vorrichtung nach Anspruch 1 oder 2, dadurch gekennzeichnet, daß der Auslauf des Fallrohres (9) mit einer seiner Auslauföffnung (14) gegenüberliegenden, die Strömungsrichtung der zulaufenden Flüssigkeit umlenkenden Glocke versehen ist.

4. Vorrichtung nach einem der Ansprüche 1 bis 3, dadurch gekennzeichnet, daß das Fallrohr (9) dicht oberhalb seiner Auslauföffnung (14) mit radial verlaufenden Bohrungen (15) versehen ist.
